Europäisches Patentamt

European Patent Office

Office européen des brevets

(19)

(11) EP 0 857 509 A1

(12) EUROPEAN PATENT APPLICATION

(43) Date of publication:
    12.08.1998  Bulletin 1998/33

(51) Int Cl.6: **B01D 53/52**, B01D 53/58,
    B01D 53/78, B05B 7/00
    // B01D111:00

(21) Application number: 98300120.7

(22) Date of filing: 08.01.1998

(84) Designated Contracting States:
    **AT BE CH DE DK ES FI FR GB GR IE IT LI LU MC
    NL PT SE**
    Designated Extension States:
    **AL LT LV MK RO SI**

(30) Priority: **08.01.1997 US 35007 P**

(71) Applicant: **Colt Engineering Corporation
    Calgary, Alberta T2W 4X9 (CA)**

(72) Inventors:
    • **Kresnyak, Steve c/o Colt Engineering Corp.
      Calgary, Alberta T2W 4X9 (CA)**
    • **Razzaghi, Minoo c/o Colt Engineering Corp.
      Calgary, Alberta T2W 4X9 (CA)**

(74) Representative: **Hayes, Adrian Chetwynd et al
    Boult Wade Tennant,
    27 Furnival Street
    London EC4A 1PQ (GB)**

(54) **Process for scrubbing ammonia and hydrogen sulfide from a fluid acid stream**

(57)    A process for scrubbing ammonia from refinery gas streams and other such streams is disclosed. The process involves the removal of hydrogen sulfide as a first step from the stream with subsequent recovery of the hydrogen sulfide. The ammonia is ionized by the introduction of a strong acid, an example of which is sulfuric acid, to render the ammonia ammonium. A product of the reaction is ammonium sulfate which can be immediately vended as a fertilizer grade product. Significant advantages in the process relate to a greater than 90% recovery of ammonia and substantially reduced levels of hydrogen sulfide in the fertilizer product. This is a marked advantage over the prior art methods which involved incineration of the compounds and other consumption and handling difficulties.

EP 0 857 509 A1

## Description

### FIELD OF THE INVENTION

The present invention is directed to a process for scrubbing compounds typically present in acid gas and liquid streams including ammonia and hydrogen sulfide. More particularly, the present invention is directed to scrubbing these compounds from the stream and recovering these compounds in an energy efficient manner without significant additional processing or handling.

### BACKGROUND OF THE INVENTION

It is well known in the art and particularly in the petroleum refinery industry and other industries that refineries produce water streams containing hydrogen sulfide and ammonia as well as other compounds. Typically, the streams are treated in a sour water stripping unit where the stripping steam vaporizes the hydrogen sulfide and ammonia. One of the difficulties with the strippers is that an acid gas is produced which contains high percentages of ammonia and hydrogen sulfide. One of the solutions that has been previously proposed and is still used in the art is to pass the acid gas into a Claus sulfur plant where the hydrogen sulfide is converted to liquid sulfur and the ammonia is incinerated. The presence of ammonia in the acid gas to the sulfur plant is inconvenient as the material must be treated by an energy intensive operation. As is known in the art, the ammonia must be incinerated at very high temperatures, for example, 2500°F to 3000°F and over which significantly adds to the cost of handling since the majority of the cost in this situation is realized by the fuel expenditures. As a further significant disadvantage, the $NO_x$ components created during the incineration, are themselves pollutants and additionally require handling.

Perhaps one of the most inconvenient features of the sulfur plant treatment for the ammonia and hydrogen sulfide is that at very high temperatures required to incinerate ammonia refractory materials used in the plant deteriorate very quickly. This translates into regular maintenance for the sulfur plant which, in turn, inherently leads to reduced productivity and therefore higher costs.

It is also known in the art and particularly in liquefied natural and petroleum gas condensate industry that contamination of hydrocarbon streams with ammonia can occur in storage facilities and during pipeline transportation. Typically, it is a matter of practice to flush suspected sections of transportation pipelines with water and similar solvents to remove the contaminants such as ammonia before transportation of hydrocarbons. The practice of flushing pipelines produces contaminated water streams requiring further treatment. The practice of flushing is ineffective in storage facilities such as caverns.

Several previous patents have proposed methods for removing hydrogen sulfide and ammonia from streams, typical of which is U.S. Patent No. 4,192,854, issued March 11, 1980 to Harvey et al. Generally speaking, the process teaches the simultaneous removal of hydrogen sulfide and ammonia from a gaseous stream by incorporating a closed loop scrubbing arrangement for the gas stream. The scrubbing compound is copper sulfate-ammonium sulfate solution which yields a copper sulfide precipitate. The hydrogen sulfide sulfur and ammonia are rejected from the system in the form of ammonium sulfate and elemental sulfur. The ratio of $H_2S$ to ammonia is an important parameter in Harvey et al. process as the process depends on the production of copper sulfide precipitate which kinetically depends on the strict pH control and buffering by ammonium sulfate. The process described by Harvey et al. revolves around the use of a catalyst and further, the destruction of hydrogen sulfide. The process is further not applicable to a refinery operation since significant redesign would be involved in tenns of the apparatus which would indude some form of a recovery system for the hydrogen sulfide.

Chu, in U.S. Patent No. 5,244,645, issued September 14, 1993, teaches a process for removing ammonia from a liquid stream using conventional scrubbing or contacting means well known in this art. The reference primarily deals with the management of ammonia and does not have any provision for hydrogen sulfide management and therefore would appear to be limited in terms of its utility for applicability for refineries and the like.

Other related references broadly applicable to the process according to the present invention include U.S. Patent Nos. 3,950,492 ; 4,477,420; 4,632,813; 4,830,839 and 5,257,588.

In all instances, the art has not recognized the capacity to recover significant amounts of the hydrogen sulfide and ammonia while additionally producing a vendible commercial fertilizer product.

The present invention is directed to a process to alleviate the limtations known art.

### SUMMARY OF THE INVENTION

One object of the present invention is to provide an improved process for scrubbing and management of ammonia and hydrogen sulfide from an acid fluid stream.

According to a further aspect of the present Invention, there is provided a process for scrubbing ammonia from an acid gas stream containing ammonia and hydrogen sulfide, characterized in that the process comprises:

providing an acidic scrubbing solution;
contacting the acid gas stream with the scrubbing solution to remove hydrogen sulfide in a first step; and

recovering ammonia in a second step.

The acid scrubbing solution may be selected from a host of suitable acids including sulfuric acid, phosphoric, acid, nitric acid, hydrochloric acid and organic acids, etc. The preferred acid is sulfuric for the production of high quality ammonium sulfate in solution. The ammonium sulfate so formed can then be vended as a fertilizer product.

In terms of the contact between the acid stream with the scrubbing solution, the process may be conducted in any form of gas liquid contacting means well known to those skilled in the art, examples of which include wet scrubbers of conventional design including spray towers, cyclone spray scrubbers, hot bed scrubbers, impingement scrubbers, fluidized-bed scrubbers, venturi or orifice scrubbers, water jet scrubbers, fibrous bed scrubbers and mechanical scrubbers. Any other suitable form of similar apparatus would be readily appreciated by those skilled in the art.

A further aspect of the present invention is to provide a process for scrubbing ammonia from an acid stream containing ammonia and hydrogen sulfide, characterized in that the process comprises:

providing an acidic scrubbing fluid ;
treating the stream with the acidic scrubbing fluid to remove hydrogen sulfide from the stream;
converting ammonia present in the stream to ammonium by contacting the stream with the scrubbing solution; and
generating ammonium sulfate.

As an alternate embodiment, it is clearly within the scope of the present invention to incorporate a scrubber, tray stripping tower, reboiler and/or condenser section onto an existing water stripper typically associated with a refinery plant. To this end, the scrubber or other suitable apparatus may be directly placed on the water stripper as a retrofit module type system. In addition, several of the scrubbers may be placed in series, parallel or any other configuration or combination of series and parallel to enhance the efficiency of the operation.

According to a further aspect of one embodiment of the present invention, there is provided a process for scrubbing ammonia from an acid fluid stream containing ammonia and hydrogen sulfide, characterized in that the process comprises:

providing an addic scrubbing solution having a pH of less than 4.0;
contacting the stream with the solution to liberate hydrogen sulfide from the stream to provide a treated stream;
recovering hydrogen sulfide removed from the treated stream;
introducing sulfuric acid into the treated stream to ionize ammonia to ammonium; and

generating ammonium sulfate.

According to yet another aspect of the present invention, there is provided a process for removing liquid hydrocarbons from a liquid containing hydrocarbons and ammonia, characterized in that the process comprises:

providing an acidic scrubbing solution;
contacting the liquid containing the hydrocarbons and ammonia with the acidic scrubbing solution;
extracting the ammonia from the liquid containing the hydrocarbons; and
separating the liquid hydrocarbons substantially devoid of ammonia.

As an alternative application to the technology set forth herein, the present system may be employed to provide a pretreatment option for the fixation of ammonia in a concentrate stream in a distillation process for the treatment of waste waters such as leachate water from landfill operations.

As is known in the art, distillation is an effective process for purification of waste water, however, distillation is based on volatilization of any compound having high volatility compared to that of water as such, there is a clear potential for contamination of the distilled water with undesirable materials. One such material is ammonia. Environmental regulations regarding ammonia content of processed waste water for surface water disposal is typically below 10 parts per million (ppm). Generally, waste water has a higher ammonia concentration which is not reduced in the processed water by the application of distillation. Many of the post-treatment options currently employed are not cost effective. An example of such a process is ion exchange which has proven to be economically unfeasible for removal of ammonia from water.

By making use of the technology in the present invention, this limitation is overcome.

Having thus described the invention, reference will now be made to the accompanying drawing illustrating preferred embodiments.

**BRIEF DESCRIPTION OF THE DRAWING**

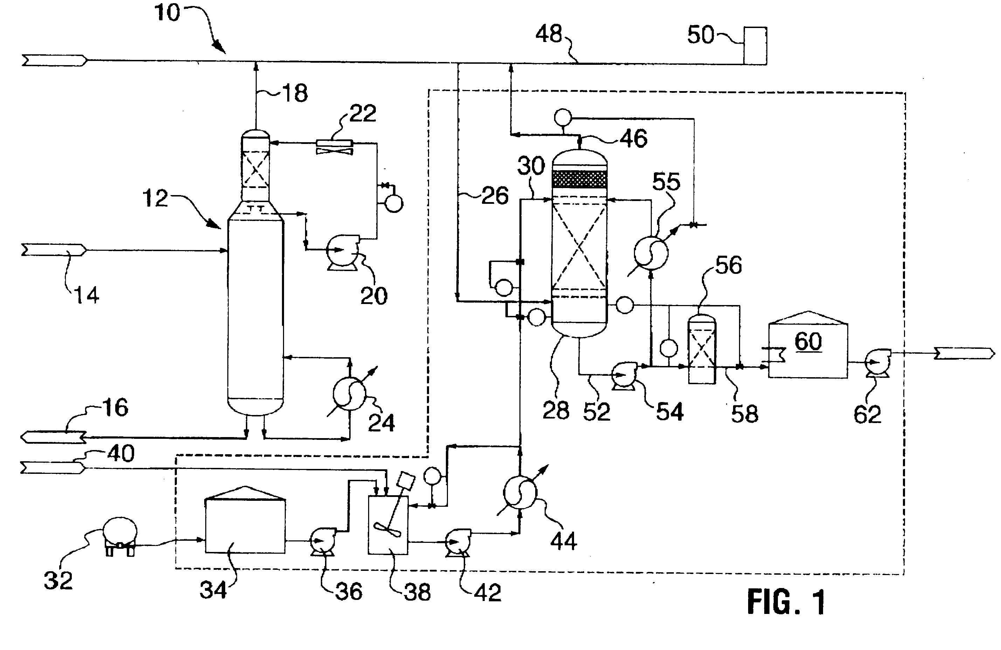

Figure 1 is a process flowchart illustrating schematically, an apparatus suitable for use in conducting one example of the process according to the present invention.

**DETAILED DESCRIPTION OF THE PREFERRED EMBODIMENTS**

Referring now to Figure 1, shown is one example of the process illustrated schematically.

Generally speaking, the overall process proceeds according to the following equation:

$$2NH_3(g) + H_2SO_4(aq) = (NH_4)_2,SO_4(aq)$$

This reaction is exothermic and therefore it necessitates cooling.

The overall side reaction for tne system containing hydrogen sulfide proceeds according to:

$$H_2S\ (g) + H_2SO_4\ (aq) = SO_2\ (g) + + 2H_2O$$

The process design of the present invention is based on minimizing the above side reaction. This is achievable by proper management of acid concentration and temperature. As an example, for a gas stream containing 26 per cent by weight ammonia and 58 per cent by weight hydrogen sulfide, using 7% excess 40 per cent by weight sulfuric acid to that which is required by the stiochiometry of reaction 1, while controlling the stripper bottom temperature at about 220°F and stripper top temperature at about 100°F, results in an exhaust gas stream of greater than 93 per cent by weight hydrogen sulfide with sulfur dioxide content of less than 0.8 per cent by weight.

Numeral 10 denotes the overall schematic illustration. A water stripper is shown and globally denoted by numeral 12 in the illustration. A sour water stream, globally denoted by numeral 14, is introduced into the stripper 12 for treatment. Once treated, a stream of treated water 16 exits the stripper 12 whereas a gas stream 18 exiting stripper 12 is discharged and can contain greater than 20% by weight ammonia on a dry basis. The stripper includes additional processing material in the form of pump 20 and water stripper cooler 22 and reboiler unit 24.

With greater specificity to the present invention, the ammonia exiting the stripper at 18 is combined with other ammonia containing streams via line 26 for passage into scrubber mears 28.

As discussed herein previously, the scrubber 28 may comprise any suitable scrubbing zone or contacting means examples of which have been set forth herein previously. In the scrubber unit 28, sulfuric acid is added to the system at 30. The sulfuric acid may be brought on site via a vehicle 32 and pumped into a storage vessel 34. The sulfuric add is stored in storage container 34 in a nearly pure form (approximately 93% by weight), which is typically available on the market. From container 34, the acid is pumped via pump 36 to a mixing container 38 wherein clean make-up water, the source of which is denoted by numeral 40, is introduced into the mixing tank 38. In view of the fact that the concentration reduction of the acid is an exothermic reaction, the diluted acid is pumped via pump 42 to a cooling arrangement broadly denoted by numeral 44. The cooled diluted acid is then introduced to scrubber 28 at 30 as discussed herein previously.

In a first step, the ammonia containing stream 26 within scrubber 28 is acidified to a pH of less than 4. A typical range would be within about pH 1 to about pH 4. The result of this acidification is the evaporation of hydrogen sulfide from the solution within scrubber 28 and fixation of ammonia in the form of ammonium ions. The hydrogen sulfide is discharged from scrubber 28 at 46 and treated in some other suitable fashion, e.g. a Claus sulfur plant, broadly denoted by numeral 50. Other suitable methods will be readily appreciated by those skilled in the art.

It has been found that it is necessary to cool the scrubber in view of the fact that the reaction between the ammonia and the sulfuric acid is exothermic. To this end, the portion of scrubbing fluid exiting the scrubber 28 via line 52 is pumped via pump 54 through a cooling arrangement 55 for subsequent reintroduction into scrubber 28. The cooled recirculated scrubbing fluid serves the purpose of keeping the gas exit temperature at less than 110°F to thereby limit the exit gas water content. As well, pump 54 introduces, as an optional step, the scrubbing fluid containing ammonium sulfate into optional filter 56, an example of which may be a charcoal filter or any other suitable arrangement for removing dissolved hydrocarbons which have entered the system through the gas stream 26 and a polishing filter (not shown) to remove residual dissolved hydrogen sulfide. Once filtered, the ammonium sulfate exits the filter at 58 and is passed into a heated storage vessel 60 for pH adjustment. Once this has been achieved, the product is pumped out of the container 60 by pump 62 for further uses as a fertilizer, etc. Typically, the fertilizer product is 40 per cent by weight liquid and can be marketed as a liquid product or delivered to a conventional crystallizer (not shown) for solid product processing.

The exhaust gas stream may contain some sulfuric acid. The process flow sheet may be modified using some of the dilution water before using it for diluting the 93 by weight per cent sulfuric acid to wash the exhaust gas from the scrubber 28 and absorbing residual acid.

Advantageously, the process according to the present invention improves operating performance and reliability of a sulfur plant in view of the fact that the high temperatures conventionally encountered in sulfur plants, which incorporate the Claus process, involve high temperatures which are destructive to the refractory materials and therefore require maintenance on a regular basis. Further, a 50% or greater volume reduction can be obtained in sulfur plant feed. The direct consequence of this is that additional hydrogen sulfide can be processed to liquid sulfur. The process according to the present invention significantly reduces the $NO_x$ levels exiting the sulfur plant and a commercially viable fertilizer can be produced in the process as an end product.

Although embodiments of the invention have been described above, it is not limited thereto and it will be apparent to those skilled in the art that numerous modifications form part of the present invention insofar as they do not depart from the spirit, nature and scope of the claimed and described invention.

## Claims

1. A process for scrubbing ammonia from an acid gas stream containing ammonia and hydrogen sulfide, which comprises:

   contacting the acid gas stream with an acidic scrubbing solution to remove hydrogen sulfide in a first step; and
   recovering ammonia in a second step.

2. The process according to claim 1 which further comprises forming ammonium sulfate in a third step.

3. The process according to claim 2 wherein said ammonium sulfate is in a liquid state.

4. The process according to any one of the preceding claims where said scrubbing solution comprises sulfuric acid, phosphoric acid, nitric acid or hydrochloric acid.

5. A process for scrubbing ammonia from an acid stream containing ammonia and hydrogen sulfide, which comprises:

   treating said stream with an acidic scrubbing fluid to remove hydrogen sulfide from said stream;
   converting ammonia present in said stream to ammonium by contacting said stream with said scrubbing fluid; and
   generating ammonium sulfate.

6. The process according to claim 5 wherein said acidic scrubbing fluid comprises sulfuric acid.

7. The process according to claim 5 or 6 which further comprises a step of recovering said hydrogen sulfide.

8. The process according to any one of claim 5 to 7 wherein said ammonia sulfate comprises liquid ammonium sulfate.

9. The process according to claim 8 which further comprises a step of polishing said liquid ammonium sulfate.

10. The process according to any one of claims 5 to 9 which further comprises a step of recovering ammonia.

11. The process according to any one of the preceding claims wherein said scrubbing solution or fluid has a pH of less than 4.0.

12. A process for scrubbing ammonia from an acid fluid stream containing ammonia and hydrogen sulfide, which comprises:

    contacting said stream with an acidic scrubbing solution having a pH of less than 4.0 to liberate hydrogen sulfide from said stream to provide a treated stream;
    recovering hydrogen sulfide removed from said treated stream;
    introducing sulfuric acid into said treated stream to ionize ammonia to ammonium; and
    generating ammonium sulfate.

13. The process according to claim 12 which further comprises a step of polishing said ammonium sulfate.

14. The process according to any one of claims 1 to 4 and 10 to 13 wherein at least 90% of said ammonia is recovered.

15. A process for removing liquid hydrocarbons from a liquid containing hydrocarbons and ammonia, which comprises:

    contacting said liquid containing said hydrocarbons and ammonia with an acidic scrubbing solution;
    extracting said ammonia from said liquid containing said hydrocarbons; and
    separating said liquid hydrocarbons substantially devoid of ammonia.

16. The process according to claim 15 which further comprises a step of recovering ammonia as ammonium sulfate fertilizer.

17. The process according to claim 15 or 16 wherein said scrubbing solution comprises sulfuric acid, phosphoric acid, nitric acid or hydrochloric acid.

FIG. 1

European Patent Office

# EUROPEAN SEARCH REPORT

Application Number

EP 98300120.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 6) |
|---|---|---|---|
| D,A | US 4192854 (HARVEY) 11 March 1980 (11.03.80), claims. | 1-3, 5,11 | B 01 D 53/52 B 01 D 53/58 B 01 D 53/78 //(B 01 D 111:00) B 05 B 7/00 |
| D,A | US 3950492 A (HAESE) 13 April 1976 (13.04.76), claims. | 1-6 | |
| D,A | US 4632813 A (ANASTASI) 30 December 1986 (30.12.86), claims. | 1,4, 11 | |
| | | | TECHNICAL FIELDS SEARCHED (Int. Cl.6) B 01 D B 05 B |

The present search report has been drawn up for all claims

| Place of search | Date of completion of the search | Examiner |
|---|---|---|
| VIENNA | 18-03-1998 | BECKER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on; or after the filing date
D : document cited in the application
L : document cited for other reasons

& : member of the same patent family, corresponding document

EPO FORM 1503 03.82 (P0401)